# EUROPEAN PATENT APPLICATION

(11) **EP 1 258 197 A1**
(43) Date of publication of application: **20.11.2002**
(21) Application number: 02253487.9
(22) Date of filing: 17.05.2002
(51) Int. Cl.: A22C 7/00

(54) **Apparatus for producing a block of material**

(30) Priority: 17.05.2001 GB 0112020
(71) Applicant: Mullaaziz, Abdullah, Leeds, LS17 8PZ (GB)
(72) Inventor: Mullaaziz, Abdullah, Leeds, LS17 8PZ (GB)
(74) Representative: Waddington, Richard

(57) **Abstract**

The invention provides apparatus for producing a block of compressed food material (17), said apparatus comprising mould means (1) operable to receive the food material, feed means (10) for feeding the food material into the mould means (1) wherein the mould means (1) and the feed means (10) are mounted for relative rotation, and compression means (11) operable to compress the food material in the mould means (1) to thereby produce the block.

## Description

The present invention relates to an apparatus for producing a block of food material and particularly, although not exclusively, relates to an apparatus for forming a block of compressed food. The present invention further relates to a method of using the apparatus.

Kebabs are essentially compressed solid meat blocks of mincemeat, for example, lamb, beef, pork, turkey, chicken or any other. Once in block form and cooked, thin pieces of the kebab meat may be sliced off the block in order to form a variety of kebab meat dishes. During the preparation of the kebab block, it is important that the amount of air pockets trapped in the mincemeat block is minimised since, as the kebab is cooked, any air trapped therein, expands forming voids which make the slicing difficult.

GB 2,251,365 describes a method and apparatus for forming a kebab block in a mould which attempts to minimise the amount of air trapped in the block during its production. However, the apparatus described therein must be manually operated during its production and, hence, output of kebab blocks is low. Other methods and apparatus exist for producing kebab blocks. However, such methods involve pumping the mincemeat into the mould at high pressures and, as a result, the meat in the resultant kebab block which is produced, exhibits a poor texture.

It is one of the aims of the present invention to address the problems described above and to provide an apparatus for forming a meat block in which the resultant meat block has a meat texture of a high quality and with which the output of said meat block is substantially higher than when using prior art apparatus. It is a further aim of the present invention to provide a method of using the apparatus.

According to a first aspect of the present invention, there is provided apparatus for producing a block of compressed food material, said apparatus comprising mould means operable to receive the food material, feed means for feeding the food material into the mould means wherein the mould means and the feed means are mounted for relative rotation, and compression means operable to compress the food material in the mould means to thereby produce the block.

Preferably, the food material is in a substantially particulate and, preferably, non-compressed form when it is being fed by the feed means into the mould means and, preferably, the food material is in a substantially compressed and, preferably, solid form when formed into the block.

Preferably, the food material comprises meat material. The meat material may be any selected from lamb, beef, pork, turkey, chicken or any combination thereof. Preferably, the food material comprises minced meat when being fed into the mould means and, preferably, a solid mass when in the block.

Preferably, the mould means is substantially conical in shape and, preferably, comprises a base and a top which together define a longitudinal axis therebetween.

Preferably, the mould means takes on the classical kebab shape. Preferably, the base of the mould means has a substantially smaller diameter than the top. Preferably, the mould means comprises a mould. Preferably, the mould means comprises at least two pieces which are, preferably, hingedly attached to each other and which together define the outer side of the mould means. Preferably, the mould means comprises a wall which defines a hollow interior which defines the outer surface of the block. Preferably, the mould means comprises at least one piece, preferably two pieces.

Preferably, the first piece of the mould means is rigidly fixed to the base of the mould means and, preferably, the second piece is releasably attached to the first piece by quick release fasteners.

Preferably, the mould means is operable to rotate substantially about the longitudinal axis. Preferably, the mould means only rotates when food material is being fed therein.

Preferably, the speed of rotation of the mould means is in the range of 1 to 80, more preferably, 10 to 60 and most preferably, 20 to 40 revolutions per minute.

Preferably, the feed means comprises an inlet and an outlet which are connected by a passage through which the material may flow. Preferably, the outlet of the feed means is operable to be positioned inside the mould means.

Preferably, the position of the feed means, more preferably, the outlet of the feed means is operable to be varied within the mould means. Preferably, the feed means is operable to be raised and lowered in and out of the mould means.

The feed means and compression means may be linked together or may be moved independently of one another. Preferably, both the feed means and the compression means rise as the mould means is filled with meat.

The feed means may be substantially flexible to allow it to be manoeuvred in and out of the mould means as desired.

Preferably, the feed means is telescopic such that the height of the outlet may be varied within the mould means. Preferably, the feed means comprises a plurality of members which are telescopically engaged with one another such that the height of the outlet of the feed means may be varied within the mould means.

Advantageously, the telescopic arrangement of the feed means allows the outlet to be raised and/or lowered inside the mould means as desired. Preferably, and advantageously, the telescopic arrangement of the feed means is computer controlled and comprises a position sensing means for sensing the height of the outlet and/or food material within the mould means.

Preferably, the apparatus comprises storage means in which the food material may be stored, preferably, prior to it being fed into the mould means. Preferably, the storage means comprises a hopper.

Preferably, the apparatus comprises delivery means by which the food material may be delivered from the storage means to the feed means.

The delivery means may comprise a screw thread feeder operable to deliver the material from the storage means to the feed means. Alternatively, or additionally, the delivery means may comprise at least one shaft having at least one baffle or paddle extending transversely away therefrom. Preferably, the shaft is adapted to rotate and is preferably, operable to urge the food material towards the feed means. Preferably, the at least one shaft is located upstream from the screw thread feeder. Preferably, the at least one shaft is located in the storage means, preferably at a lower region thereof. Preferably, the delivery means comprises two shafts which rotate in opposite directions to each other.

Preferably, the delivery means delivers the food material to the feed means by any suitable means, for example, a screw thread feeder, a pneumatic feeder, a hydraulic pump or pressure feeder or suitable peristaltic means.

Preferably, and advantageously, the aforesaid delivery means ensures that the food material is delivered to the feed means and, preferably, the mould means at a substantially low pressure. Advantageously, the low pressure results in the block of food material having a suitable texture. Advantageously, when the food material is a food material, its texture and palatability is substantially improved by the reduced pressure achieved by the apparatus.

Preferably, the food material is fed into the base of the mould means and, preferably, as the mould means rotates, the block is formed by sequential layering of the food material therein.

Advantageously, as more food material is fed into the mould means, the height of the forming block gradually increases up the mould means.

Preferably, the compression means comprises a compression foot which is, preferably, attached to an end of shaft means which is, preferably, slidably retained within a vertical slide mechanism. Preferably, the compression means is computer-controlled and, preferably, comprises height sensing means to sense the height of the developing block within the mould means. The foot may comprise rolling means, preferably a roller, operable to rotate as the material passes thereunder.

Preferably, the foot is substantially wedge shaped comprising a lower surface and an upper surface.

Preferably, the lower surface which substantially faces the direction of the on-coming newly fed material comprises a leading edge. Preferably, the leading edge is tapered to draw the newly fed material thereunder. Preferably, the rest of the lower surface is substantially flat. Preferably, the upper surface is substantially flat.

The compression foot may be attached to the end of the shaft by any suitable means.

Preferably, the compression means is, in use, spaced from within the mould means.

Advantageously, such positioning prevents the likelihood of the compression means and the feed means coming into contact with one another and, therefore, either being damaged.

The compression means may be raised up the height of the mould means as the height of the block increases within the mould means. The height of the block may be suitably monitored so that the height of the compression may be suitably adjusted, preferably, by the height sensing means.

Preferably, the height of the compression means increases as the height of the block increases within the mould means.

Preferably, the compression means oscillates substantially along an axis substantially parallel to the longitudinal axis of the mould means. Preferably, said oscillation occurs as well as the compression means being raised up the mould means.

The compression means may oscillate along an axis which is substantially parallel with a side of the mould means. Preferably, as the compression means rises up the mould means, the distance between the compression means and mould means remains substantially constant.

Advantageously, this ensures that the food material is compressed across the entire surface of the mould means as a block of material is produced therein.

Preferably, the compression means oscillates at a frequency in the range of 50-1000 oscillations per minute, more preferably, 100-750 oscillations per minute, and, most preferably, 200-500 oscillations per minute.

Preferably, the compression means is suitably shaped, preferably being semi-circular, such that it is operable to abut the side of the mould means. The compression means may be crescent shaped. Preferably, an outer surface of the crescent abuts the inside of the mould means, and preferably, an inner surface of the crescent abuts the feed means.

Preferably, the compression means is operable to turn about its longitudinal axis as it rises up within the mould means as the block is formed therein. The angle of turn may vary depending on the shape and size of the mould.

Preferably, the compression means is operable to turn through an angle in the range of between 1-90°, preferably, 10-70°, more preferably, 20-60°, and most preferably, 30-50°. In a most preferred embodiment, the compression means is operable to turn by 40°.

The compression means, preferably the compression foot, may be operable to be enlarged to ensure that the space between the centre of the mould wall is filled with material as the compression foot rises up the mould. The compression foot may have an iris-type mechanism.

Said enlarging may be achieved by pneumatic, hydraulic, electrical or mechanical means.

Preferably, the mould means is mounted on indexing means, preferably, an indexing table. Preferably, said indexing means comprises a plurality of mould means, preferably, at least four mould means.

Preferably, the indexing means is operable to rotate thereby rotating the or each mould means mounted thereon.

Advantageously, the indexing means enables a number of mould means to be filled with food material during the same batch.

Preferably, the mould means and/or indexing means comprises weight sensing means operable to measure the weight of the block of material.

Preferably, rotation of the mould means is powered by suitable drive means, preferably, a drive mechanism which is, preferably, housed within the indexing means.

Preferably, the apparatus comprises first and second support means adapted, in use, to support the food material once compressed. Preferably, the first support means comprises a support plate which, preferably has an aperture extending therethrough, preferably substantially in the centre thereof.

Preferably, the second support means comprises a tube which extends, in use, substantially through the centre of the food material. The second support means may be provided in the mould means prior to feeding the food material therein such that the material fills up the mould means around the second support means. Preferably, the second support means is inserted into the food material after the mould means has been filled.

Preferably, the shaft is adapted to be inserted into the feed material thereby delivery the second support means therein. Preferably, the second support means is adapted to engage with the first support means preferably, the aperture thereof.

Preferably, the apparatus comprises a support means delivery system. Preferably, the delivery system comprises a shaft on which the second support means is maintained, preferably by a friction fit, preferably by an o-ring.

Preferably, the mould means comprises an ejecting mechanism operable to eject the block of food material from out of the mould means once formed.

Preferably, the ejecting mechanism comprises at least one ejector pin which extends substantially into the mould means and which is operable to force the block of food material out of the mould means once formed.

Preferably, the or each ejector pin extends through the base and into the mould means which ejector pin may be activated to lever the block out of the mould means.

According to a second aspect of the present invention, there is provided a method of producing a block of compressed food material, said method comprising the steps of:-
i) feeding food material with feeding means into mould means, said mould means being operable to receive the food material and operable to rotate relative to the feeding means as said block is produced therein; and
ii) compressing the food material in the mould means using compression means to thereby produce the block.

Preferably, the compression means comprises a compression foot which is, preferably, attached to an end of shaft means which is, preferably, slidably retained within a vertical slide mechanism.

Preferably, the height of the compression means increases as the height of the block increases within the mould means.

Preferably, the compression means oscillates substantially along an axis substantially parallel to the longitudinal axis of the mould means. Preferably, said oscillation occurs as well as the compression means being raised up the mould means.

The compression means may oscillate along an axis which is substantially parallel with a side of the mould means. Preferably, as the compression means rises up the mould means, the distance between the compression means and mould means remains substantially constant.

Preferably, the compression means is suitably shaped, preferably being semi-circular, such that it is operable to abut the side of the mould means, the compression means may be crescent shaped.

Preferably, the compression means is operable to turn about its longitudinal axis as it rises up within the mould means as the block is formed therein. The angle of turn may vary depending on the shape and size of the mould.

Preferably, the compression means is operable to turn through at an angle in the range of between 1-90°, preferably, 10-70°, more preferably, 20-60°, and most preferably, 30-50°. In a most preferred embodiment, the compression means is operable to turn by 40°.

Preferably, the method further comprises the step of initially lining the mould means with a liner before food material is fed therein. Advantageously, the liner facilitates the removal of the block of food material when formed.

Preferably, first support means is placed on top of the liner prior to inserting food material thereon. Preferably, the first support means comprises a support plate which, preferably has an aperture extending therethrough, preferably substantially in the centre thereof.

Preferably, second support means is inserted into the food material once compressed inside the mould means. Preferably, the second support means comprises a tube which extends, in use, substantially through the centre of the food material and preferably engages with the first support means, preferably the aperture thereof. The second support means may be provided in the mould means prior to feeding the food material therein such that the material fills up the mould means around the support means. However, preferably, the second support means is inserted into the food material after the mould means has been filled.

Preferably, the second support means is inserted into the food material by a delivery system. Preferably, the delivery system comprises a shaft on which the second support means is maintained, preferably by a friction fit, preferably by an o-ring.

Preferably, a plurality of mould means are located on indexing means which is operable to rotate the mould means away from the feed means and compression means so that an operator may gain access thereto.

According to a third aspect of the present invention, there is provided a block of compressed food material, said block being produced using the apparatus of the first aspect and/or the method of the second aspect of the present invention.

All of the features described herein may be combined with any of the above aspects, in any combination.

For a better understanding of the invention and to show how embodiments of the same may be carried into effect, reference will now be made, by way of example, to the accompanying diagrammatic drawings, in which:-
Figure 1 shows a schematic side view of a first embodiment of apparatus for forming a block of meat;
Figure 2 shows a schematic side view of a compression foot of the apparatus as shown in Figure 1;
Figure 3 shows a schematic plan view of the compression foot shown in Figure 2 at a first position;
Figure 4 shows a schematic plan view of the compression foot shown in Figure 2 at a second position;
Figure 5 shows a schematic side view of a second embodiment of apparatus for forming a block of meat;
Figure 6 shows a schematic plan view of the compression foot of the apparatus shown in Figure 5; and
Figure 7 shows a schematic side view of a hopper.

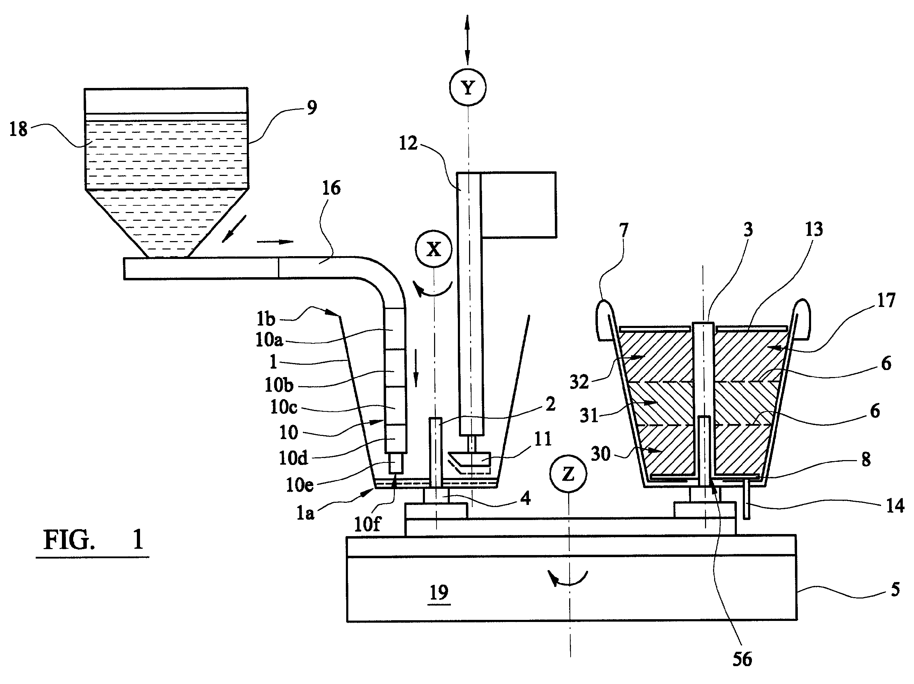

Referring to Figure 1, there is shown a schematic diagram of a first embodiment of an apparatus used for producing a block of meat 17, e.g. a kebab meat block. The apparatus comprises a hopper 9 which contains prepared mincemeat 18 which is, for example, lamb meat. The meat 18 is passed from the hopper 9 and is inserted into a mould 1 where it is compressed by a compression foot 11 to form the final kebab block 17.

In more detail, the mincemeat 18 passes out of the lower end of the hopper 9 and is passed along delivery tubing 16 which is connected to a feed tube 10. The feed tube 10 is either flexible or telescopic in which case it comprises a number of telescopic sections illustrated as 10a-10d. Alternatively, the feed tube 10 is a rigid tube attached to the hopper 9, both of which can be moved by means of a lifting control apparatus (not shown) either upwards and downwards, with respect to the mould 1.

It should be appreciated that figure 1 shows the telescopic tubing as consisting of five segments (10a-10d) which are in telescopic connection with each other. Whether the feed tube 10 is either flexible, telescopic, or rigid, it is arranged to extend down into a rotating conical-shaped mould 1.

The mould 1 is conical having a base 1a which has a smaller diameter than the upper section 1b of the mould 1. In the first embodiment of the apparatus, a fixed or retractable rod 2 extends up from the base 1a into the mould 1 in a plane which is substantially parallel to the longitudinal axis of the mould 1. However, in a second embodiment described hereinafter, the retractable rod 2 is not included in the mould 1.

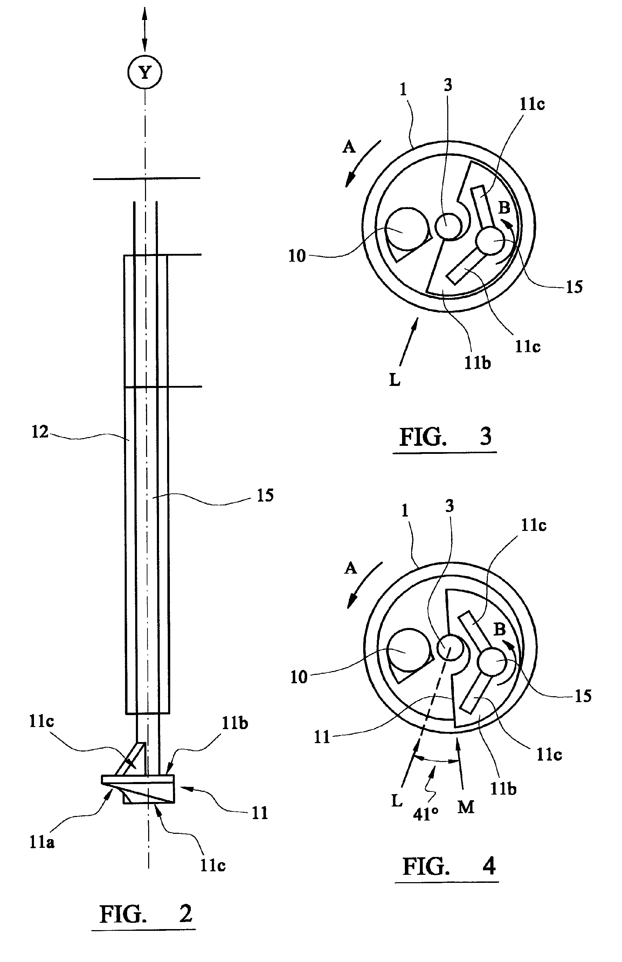

The mould 1 is made up of two halves which are split vertically at approximately 200° and 160° when looking at it in a plan view (see Figures 3 and 4). The smaller side of the mould 1 is rigidly fixed to the base 1a of the mould 1, and the other larger side of the mould 1 is attached to the small side by quick release fasteners and lift-off hinges (not shown).

The lower edge of the mould 1 engages a recess (not shown) on the base 1a. This allows for easy removal of the finished kebab block 17 and for cleaning the mould 1 when empty. The base 1a of the mould 1 adjacent to the opening side has cut outs to aid removal of the kebab meat block 17 once formed.

The mould 1 is centrally mounted on to a spindle 4 and is rotated either clockwise or anticlockwise on a vertical axis X. Rotation is achieved by a drive mechanism 19 which is housed in an indexing table 5 on which the mould 1 is supported together with a number of other spaced apart moulds 1.

The indexing table 5 increases the production capacity of the apparatus as a whole. The mould 1 is only rotated by the drive mechanism 19 when it is being filled with mincemeat 18. The indexing table 5 allows the kebab block 17 to be formed sequentially in layers (30, 31, 32) allowing the easy positioning of sheets of stabilising food material 6 between each layer of mincemeat 18. Furthermore, the indexing table 5 also allows each mould 1 to be emptied and prepared whilst other moulds 1 are being filled with mincemeat 18.

Two processes for producing the kebab block 17 will now be described in detail.

The first process uses the mould 1 which has the retractable rod 2 extending upwardly therefrom. Firstly, the mould 1 is prepared for filling with mincemeat 18 by placing a plastic bag or open ended plastic sleeve 7 closely adjacent the inner walls of the freshly cleaned mould 1. Surplus sleeve 7 is pushed to the base 1a of the mould 1 and the upper, open end of the sleeve 7 is folded outwardly over the upper rim 1b of the mould 1.

A small circular plate 8, having a hole 56 extending therethrough for accommodating the retractable rod 2, is then placed over the retractable rod 2 and pushed down to rest on the base 1a of the mould 1 thereby trapping any surplus plastic sleeve 7 on the base 1a. A rigid kebab mounting sleeve 3 is then placed over the central rod 2 so that it abuts the base 1a of the mould 1.

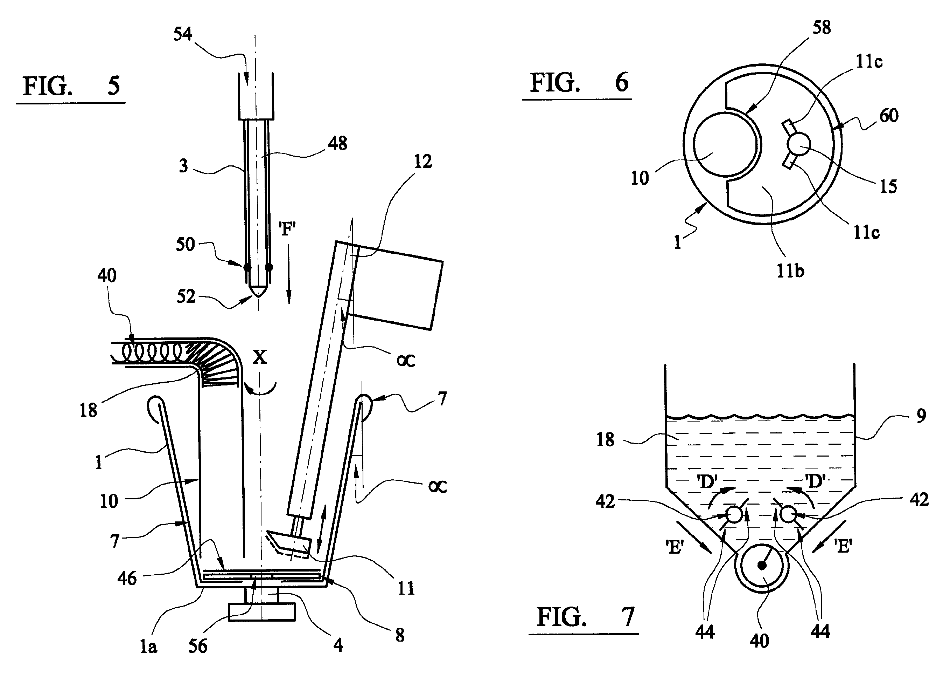

The mould 1 is now ready for filling with mincemeat 18 and is set to rotate at the desired speed and direction by the drive mechanism 19. The feed tube 10 is supplied with mincemeat 18 from the supply hopper 9 via the delivery tubing 16 by any convenient method. Examples of such methods include a screw thread feeder 40 as shown in Figure 7, a pneumatic pump feeder (not shown), a hydraulic pump (not shown), peristaltic or other means of low pressure feeder (not shown). The mincemeat 18 may also be fed by hand.

Referring to Figure 7, to provide consistent feeding of the mincemeat 18 to the screw thread feeder 40 from the hopper 9, two contra-rotating paddle shafts 42 are arranged in the hopper 9 with their axes extending parallel with the axis of the screw thread feeder 40. The shafts 42 are fitted with a number of flat or angled paddle blades 44. The shafts 42 and blades 44 rotate clear of the hopper 9 sides and the screw thread feeder 40. When the screw thread feeder 40 is driven, the shafts 42 are also driven. The two paddle shafts 42 rotate in opposite directions with respect to each other as shown by arrows 'D', and in a direction which promotes feeding the mincemeat 18 in the hopper 9 into the screw thread feeder 40, as shown by arrows 'E' in Figure 5.

Mincemeat 18 is passed along the delivery tubing 16 and out through the telescopic, flexible or rigid feed tube 10. The mincemeat 18 emerges from the end 10f of the tube 10 at the base 1a of the mould 1 which rotates to evenly distribute the meat 18 across the base 1a of the mould 1. Rotation also prevents the end 10f of the feed tube 10 from becoming blocked with mincemeat 18. A compression foot 11 extends downwardly into the mould 1 to a level just above the upper surface of the mincemeat 18.

Referring to figure 2, a first embodiment of the compression foot 11 is shown in more detail. The foot 11 is attached at the end of an elongate foot shaft 15 which is slidably retained within a vertical slide mechanism 12. The foot 11 is wedge-shaped having a flat lower surface 11c, a tapering leading edge 11a which faces the oncoming newly laid material in the mould 1 and a flat upper surface 11b. The tapering leading edge 11a draws meat 18 thereunder. The foot 11 is secured to the base of the shaft 15 by two triangular-shaped supports 11c. In Figure 1, the compression foot 11 is shown extending into the mould 1 on the opposite side from the delivery tube 10 to avoid contact therewith.

Referring to figures 3 and 4, the compression foot 11 is shown in position within the mould 1. In plan view, the foot 11 is semi-circular shaped with the curvature of the outer diameter being just less than the interior diameter at the base of the mould 1. Figure 3 shows the foot 11 at the base 1a of the mould 1, and figure 4 shows the foot 11 at the top 1b of the mould 1.

The compression foot 11 vibrates at a rate of between 50-500 vibrations per minute along the axis Y (shown in Figure 1) which is parallel to the longitudinal axis of the mould 1. The meat 18 is compressed into the base 1a of the mould 1 thereby completely filling the mould 1 from the central kebab mounting tube 3 to the side of the mould 1. Rotation of the mould 1 about its vertical axis X in a direction as shown by arrow A helps to draw the mincemeat 18 underneath the compression foot 11 particularly the tapering leading edge 11a where it is rapidly compressed into place, thereby excluding or minimising any air pockets which may otherwise form.

As the mincemeat 18 is continuously fed into the rotating mould 1, the depth of meat 18 rises up the mould. As the level of mincemeat 18 continues to rise up the mould 1, the end 1 of the feed tube 10 maintains its relative position with respect to the level of meat 18 and the compression foot 11 by also rising upwardly in the mould 1. This is achieved by either raising the feed tube 10 up the tube manually or mechanically, or by taking advantage of the telescopic tubing 10a-10e. The compression foot 11 continues to vibrate and also concomitantly rises vertically up the mould 1 at a rate equivalent to the rate of the meat 18 rising up the mould to ensure a constant pressure on the meat 18. The feed tube 10 maintains its relative position with respect to the foot 11 either by a mechanical connection (not shown) to the vertical slide 12 or by means of a position sensor and separate lift mechanism (not shown).

Due to the conical shape of the mould 1, as the depth of the meat block 17 increases in height up the mould 1, the diameter of the mould 1 and, hence, the surface area of the meat block 17 which must be compressed by the foot 11 also increases. Therefore, in order to compress the complete surface area of the developing meat block 17, the compression foot 11 turns or twists about axis Y in the direction shown by arrow B for given mould 1 rotation. The foot 11 turns by the relevant angle eg 41° when viewing the apparatus in plan view, ie at the base 1a of the mould 1 shown at position L, the foot has not rotated (0°) and at the top 1b of the mould 1 shown at position M, the foot has rotated by the relevant angle eg 41°. The foot 11 is semi-circular shaped with a raised leading edge 11a facing the incoming meat 18 and is designed to fit closely against the sides of the mould 1. It makes a good fit on the side of the mould 1 and the central sleeve 3. The foot 11 rotation is performed either by a cam action in the vertical sleeve 3, or by a separate mechanism such as a stepper motor drive (not shown).

As the levels of the mincemeat 18 and the respective levels of the feed tube 10 and the compression foot 11 rise up the mould 1 and reach a pre-determined level, the process is temporarily stopped. No further meat 18 is pumped out of tube 10, the compression foot 11 is stopped from vibrating and the mould 1 is temporarily stopped from rotating about axis X.

The feed tube 10 and compression foot 11 are then raised up out of the mould 1. Once the feed tube 10 and foot 11 are clear from the mould 1, the indexing table 5 is then rotated about axis Z so that an operator may manually insert a sheet of stabilising food material 6 onto the upper surface of meat 18. However, for smaller blocks of meat 17, there is no need to use stabilising material 6. Once the stabilising food material 6 is in place, the indexing table 5 is rotated back around to its previous position whereupon the feed tube 10 and compression foot 11 are inserted back into the mould 1 at the correct level within the mould 1. Meat 18 filling and compression is then initiated to continue to form the next layer 31 of the kebab block 17. The process is repeated for sequential layers 31, 32 etc until the kebab block 17 is completely formed as required for larger kebabs.

When the mould 1 has been filled with the meat block 17 to the required level, the feed tube 10 and foot 11 are retracted and a circular plate 13 is placed on top of the meat 17. The sides of the plastic sleeve 7 are folded inwardly over the plate 13 and sealed if required.

The side of the mould 1 is then opened or removed and the formed kebab 17 together with the upper plate 13, the lower plate 8, the mounting tube 3 and the plastic sleeve 7 are then removed from the mould 1. Ejector pins 14 which extend upwardly through the base 1a of the mould 1 are operated to lift the kebab block 17 out of the mould 1 allowing easy access. The plastic sleeve 7 can then be sealed at the base 1a if required and the kebab 17 removed for storage or for freezing.

Referring to figures 5 and 6, there is shown a second embodiment of the apparatus for producing a block of meat 17. In the second embodiment, the need for the compression foot 11 to rotate about axis 'Y' as it rises up the mould 1 has been eliminated, and the following method is used.

Firstly, the plastic sleeve 7 is placed in the mould as before. Secondly, the circular plate 8 with hole 56 extending therethrough is placed on the base 1a of the mould 1 trapping surplus sleeve 7 therebetween. Using the second apparatus, the rigid mounting sleeve 3 is not fitted until after the mould 1 has been filled with mincemeat 18. Therefore, the hole 56 extending through the centre of plate 8 must be large enough to accommodate the kebab mounting sleeve 3 which is inserted later as is described hereinafter.

A circular plate 46 of plastic foam or similar material (e.g. depron, pizza base material etc) is placed over the circular plate 8 to contain the bottom of the kebab meat 18. The mould 1 is then filled with meat 18 as above for the first method.

Referring to figure 5 and 6, because the kebab mounting sleeve 3 is not placed inside the mould 1 during filling, the use of a larger diameter feed tube 10 and the compression foot is possible. Furthermore, in the second embodiment of the apparatus, the foot 11 is a larger crescent shape rather than semi-circular as in the first embodiment. The inside 58 of the compression foot 11 fits closely around the feed tube 10, and the outside 60 of the foot 11 fits closely around the inside of the mould 1.

Importantly, in the second embodiment, the vibration axis 'Y' of the compression foot 11 is arranged so that it is constantly parallel with the side of the mould 1 which forms angle 'α' with the vertical rotation axis 'X' . This is achieved by tilting the vertical slide mechanism 12 and integral compression foot 11 outwards from the vertical rotation axis 'X' of the mould 1 so that it is tilted at also angle 'α'. Thus, as the foot 11 rises up the mould 1, the distance between the compression foot 11 and the inside of the mould 1 is maintained. Because the foot 11 is larger in the second embodiment compared to the first embodiment, mincemeat 18 is compressed over the full surface area of the mould 1.

When the mould 1 has been filled to the required level, the feed tube 10 and compression foot 11 are retracted and the circular plate 13 is placed on top of the meat kebab 17 as in the first method. Plate 13 may or may not have a central hole of a size to accommodate the rigid kebab mounting sleeve 3.

The mould 1 is now indexed around to a position clear of the feed tube 10 and compression foot 11 so that a rigid kebab mounting sleeve 3 can be inserted into the meat block 17. In the second embodiment of the apparatus, the sleeve 3 is mounted on a rod 48 and held in position on the rod 48 by an O-ring 50 or other means. This provides a friction force to prevent the sleeve 3 from dropping off the rod 48. The sleeve 3 and rod 48 are positioned centrally above the meat block 17. The bottom end of the rod 48 has a conical or bullet shaped end and a pneumatic cylinder 54 or similar pushes the rod 48 and sleeve 3 downwards in the direction shown by arrow 'F'. The rod 48 and sleeve 3 travel through the upper circular plate 13, through the meat block 17, through the lower circular plate 46 and through the aperture 56 of plate 8. Displacement of the meat 18 helps to further compact the meat block 17. The rod 48 is then retracted upwards out of the block 17, and friction with the meat 18 around the sleeve 3 is sufficient to leave the sleeve 3 in place in the centre of the meat block 17. The mould 1 can now be opened to remove the meat block 17, or the mould 1 can be indexed around to another position in order to remove the meat block 17.

Advantages of the apparatus reside in the feed tube 10 being supplied by the delivery tube which ensures that the mincemeat 18 is inserted into the mould 1 at a relatively low pressure thereby improving the texture qualities of the kebab meat block 17. Furthermore, the oscillating compression foot 11 does not damage the meat 18 as the block 17 is being formed.

In the first embodiment, the foot 11 rotates along its 'Y' axis ensuring that the meat 18 is sufficiently compressed right up to the sides of the mould 1 which would otherwise not be achieved due to the conical shape of the mould 1. In the second embodiment, this is achieved by tilting the axis of the compression foot 3 so that it is parallel with the side of the mould 1.

In the second embodiment, the sleeve 3 is inserted into the mould 1 after the meat block 17 has been made enabling a larger feed tube 10 and compression foot 11 to be used.

Finally, the rotating mould 1 ensures that the meat 18 is consistently and constantly compressed to the same extent throughout the process, and the indexing table 5 allows for a number of moulds 1 to be filled with meat 18 during the same batch. This enables the apparatus to be substantially automatic and necessitates little intervention by the operator.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. Apparatus for producing a block of compressed food material, said apparatus comprising mould means (1) operable to receive the food material, feed means (10) for feeding the food material into the mould means (1) wherein the mould means (1) and the feed means (10) are mounted for relative rotation, and compression means (11) operable to compress the food material in the mould means (1) to thereby produce the block.

2. Apparatus according to claim 1, wherein the mould means (1) comprises at least two pieces hingedly attached to each other and which together define the outer side of the mould means (1).

3. Apparatus according to either claim 1 or claim 2, wherein the feed means (10) comprises an inlet and an outlet which are connected by a passage through which the material may flow, the outlet of the feed means (10) being operable to be positioned inside the mould means (1).

4. Apparatus according to claim 3, wherein the position of the outlet of the feed means (10) is operable to be varied within the mould means (1).

5. Apparatus according to any preceding claim, wherein the feed means (10) and compression means (11) are linked together or moved independently of one another.

6. Apparatus according to any preceding claim, wherein the apparatus comprises storage means (9) in which the food material may be stored, prior to it being fed into the mould means (1).

7. Apparatus according to claim 6, wherein the apparatus comprises delivery means (40,44) by which the food material may be delivered from the storage means (9) to the feed means (10).

8. Apparatus according to any preceding claim, wherein the compression means (11) comprises a compression foot, attached to an end of shaft means which is slidably retained within a vertical slide mechanism.

9. Apparatus according to any preceding claim, wherein the compression means (11) comprises height sensing means to sense the height of the developing block within the mould means (1).

10. Apparatus according to any preceding claim, wherein the compression means (11) oscillates along an axis which is substantially parallel with a side of the mould means (1).

11. Apparatus according to any preceding claim, wherein the apparatus comprises first and second support means (3) adapted, in use, to support the food material once compressed, wherein, the first support means (8) comprises a support plate having an aperture extending therethrough substantially in the centre thereof, the second support means (3) comprises a tube which extends, in use, substantially through the centre of the food material.

12. Apparatus according to claim 11, wherein the apparatus comprises a support means delivery system (48) which comprises a shaft on which the second support means (3) is maintained, the shaft being adapted to be inserted into the food material thereby delivering the second support means (3) therein, wherein the second support means (3) is adapted to engage with the first support means (8).

13. A method of producing a block of compressed food material, said method comprising the steps of:-
iii) feeding food material with feeding means into mould means (1), said mould means being operable to receive the food material and operable to rotate relative to the feeding means as said block is produced therein; and
iv) compressing the food material in the mould means (1) using compression means (11) to thereby produce the block.

14. A block of compressed food material, said block being produced using the apparatus according to any of claims 1 to 12 and/or the method according to claim 13.
